# FASCICULE DE BREVET EUROPEEN

(11) **EP 2 134 995 B1**
(45) Date de publication et mention de la délivrance du brevet: **04.11.2020**
(21) Numéro de dépôt: 08788183.5
(22) Date de dépôt: 15.04.2008
(51) Int. Cl.: F16K 41/10, F16J 15/36

(54) **VANNE À GARNITURE MÉCANIQUE ET ENSEMBLE CORRESPONDANT**
VENTIL UND VORRICHTUNG MIT EINER MECHANISCHEN DICHTUNG
VALVE WITH MECHANICAL LINING AND CORRESPONDING ASSEMBLY

(30) Priorité: 18.04.2007 FR 0754549
(43) Date de publication de la demande: 23.12.2009
(73) Titulaire: Daher Valves SAS, 26240 Saint-Vallier (FR)
(72) Inventeur: VERDELET, Alain, 76810 Gruchet Saint Simeon (FR)
(74) Mandataire: Champain, Christophe
(86) Numéro de dépôt international: PCT/FR2008/050667
(87) Numéro de publication internationale: WO 2008/145891

(56) Documents cités:
- FR-A- 1 281 224
- FR-A1- 2 451 526
- GB-A- 2 111 139
- GB-A- 2 260 378
- JP-A- 60 188 677
- NL-A- 7 202 080
- US-A- 4 175 753
- US-A- 4 261 581
- US-A- 4 386 785
- US-A- 4 890 851
- US-A- 4 971 337
- US-A- 5 544 897
- US-A- 5 901 965
- US-A1- 2005 194 746
- US-B1- 6 182 696

## Description

La présente invention concerne un ensemble selon la revendication 1. Des vannes simples sont connues de JP 60 188 677, des tandems de vannes de FR2451526.

On connaît dans l'état de la technique des vannes papillon comprenant un corps de base délimitant un tronçon d'écoulement d'un fluide et un organe obturateur adapté pour obturer le tronçon d'écoulement. L'organe obturateur est logé en rotation autour d'un axe au moyen d'un arbre d'actionnement.

De telles vannes sont par exemple utilisées dans des centrales nucléaires dans les conduits d'admission de turbines.

L'étanchéité entre l'arbre d'actionnement et le corps de base est habituellement assurée par une garniture tressée qui est comprimée à l'aide d'un fouloir et d'une bride de presse étoupe.

Les vannes papillon connues conduisent à un temps de réaction important pour un couple d'actionnement donné.

L'invention a pour but de fournir une vanne ayant un temps de réaction court pour un couple d'actionnement donné.

A cet effet, l'invention a pour objet un ensemble ayant les caractéristiques de la revendication 1.

Selon des modes de réalisation particuliers, l'ensemble selon l'invention comprend les caractéristiques des revendications dépendantes.

L'invention sera mieux comprise à la lecture de la description qui va suivre, donnée uniquement à titre d'exemple et faite en se référant aux dessins annexés, sur lesquels :
- la Figure 1 montre une vue de dessus d'un ensemble de deux vannes selon l'invention ;
- la Figure 2 montre une vue en perspective et partiellement coupée d'une partie du dispositif de l'invention. et
- la Figure 3 montre un détail de la Figure 2 à plus grande échelle.

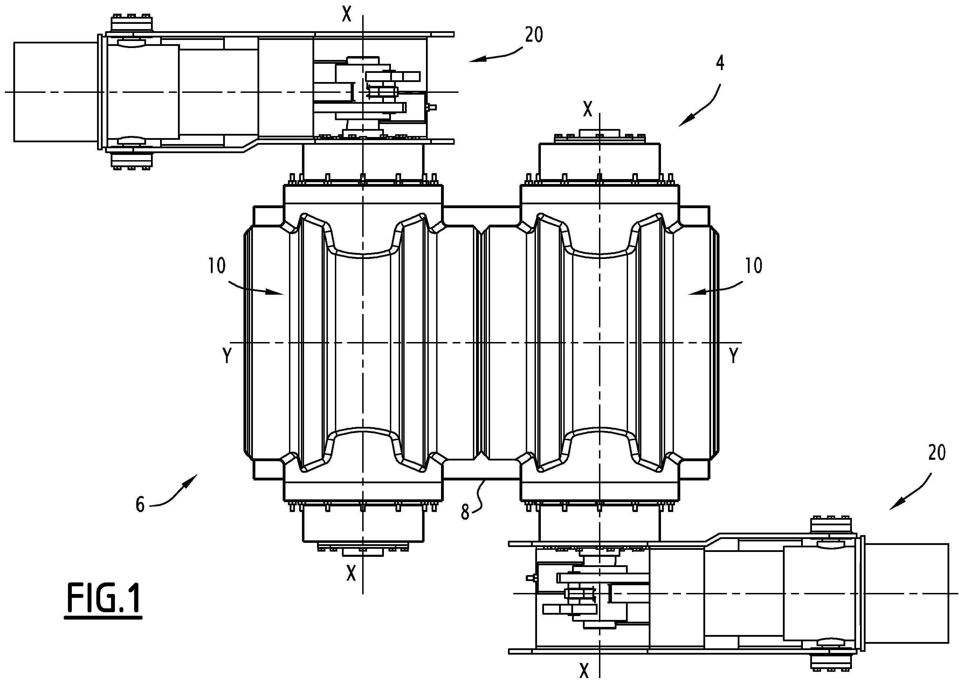

Sur la Figure 1 est montré en plan un ensemble de deux vannes, désigné par la référence générale 2. L'ensemble 2 comporte deux vannes 4 et 6. Les deux vannes 4 et 6 sont identiques et sont disposées l'une par rapport à l'autre décalées de 180° autour d'un axe s'étendant perpendiculairement au plan de la Figure 1. L'ensemble 2 est en outre muni d'une plaque de base 8 sur laquelle sont fixées les deux vannes 4 et 6.

L'ensemble 2 est destiné à être installé par exemple dans une centrale nucléaire dans un conduit d'admission de turbine vapeur et sert à faire l'isolement et la régulation à fermeture rapide du conduit d'admission. Les vannes 4 et 6 sont destinées à fonctionner à des températures élevées, par exemple de l'ordre de 300° C, et à des pressions également élevées, par exemple de l'ordre de 16 bars.

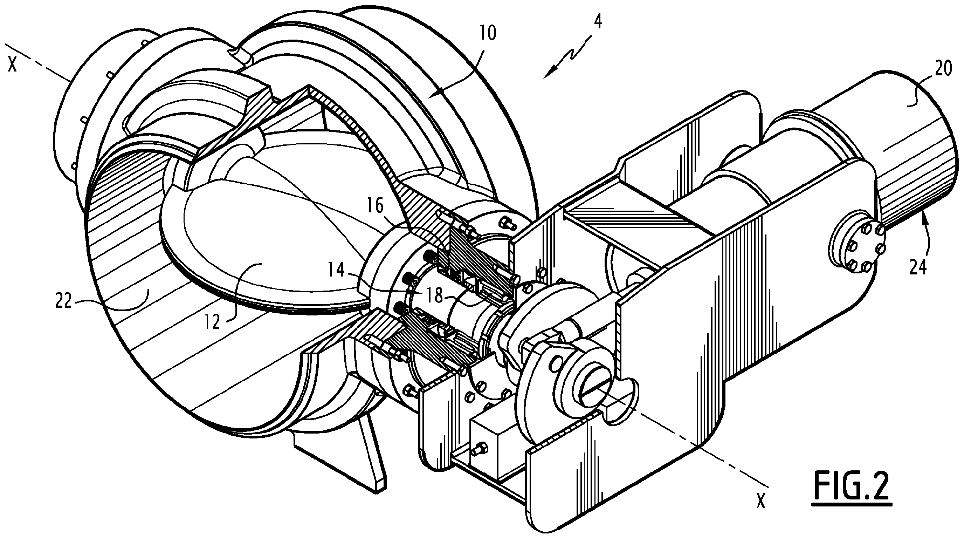

Sur la Figure 2 est représentée en perspective la vanne 4. La vanne 4 est une vanne à papillon qui comprend un corps de base 10, un organe obturateur 12, un arbre d'actionnement 14, une garniture mécanique 16, un roulement à aiguilles 18 et un dispositif d'actionnement 20.

Le corps de base 10 définit un tronçon d'écoulement 22, de section transversale circulaire, qui est traversé par le fluide sous pression lors du fonctionnement. Le tronçon d'écoulement 22 s'étend suivant un axe Y-Y et les deux tronçons d'écoulement 22 des vannes 4 et 6 sont alignés de telle sorte que leurs axes Y-Y coïncident.

L'organe obturateur 12 est constitué par un disque bombé ayant une forme circulaire adaptée à la section transversale du tronçon d'écoulement. L'organe obturateur 12 est fixé à l'arbre d'actionnement 14.

L'arbre d'actionnement 14, et en conséquence l'organe obturateur 12, est mobile en rotation autour d'un axe de rotation X-X. Dans ce qui suit, les expressions « axialement » et « en rotation » seront utilisées par rapport à l'axe de rotation X-X. L'organe obturateur 12 et l'arbre d'actionnement 14 sont mobiles entre une position de passage dans laquelle le fluide peut circuler à travers le tronçon d'écoulement 22 et une position d'obturation dans laquelle l'organe obturateur 12 ferme complètement le tronçon d'écoulement 22.

L'arbre d'actionnement 14 est supporté en rotation par rapport au corps de base 10 au moyen du roulement à aiguilles 18. En variante, le roulement à aiguilles peut être remplacé par un roulement ayant des corps de roulement autre que des aiguilles.

L'arbre d'actionnement 14 peut être déplacé de ses positions de passage et d'obturation au moyen du dispositif d'actionnement 20. Ce dispositif d'actionnement 20 comporte par exemple un vérin hydraulique 25 dont le piston est relié à l'arbre d'actionnement.

Afin d'assurer l'étanchéité entre le tronçon d'écoulement 22 et l'espace extérieur, notamment vis-à-vis du dispositif d'actionnement 20, la garniture mécanique 16 est insérée entre l'arbre d'actionnement 14 et un logement 28 ménagé dans le corps de base 10.

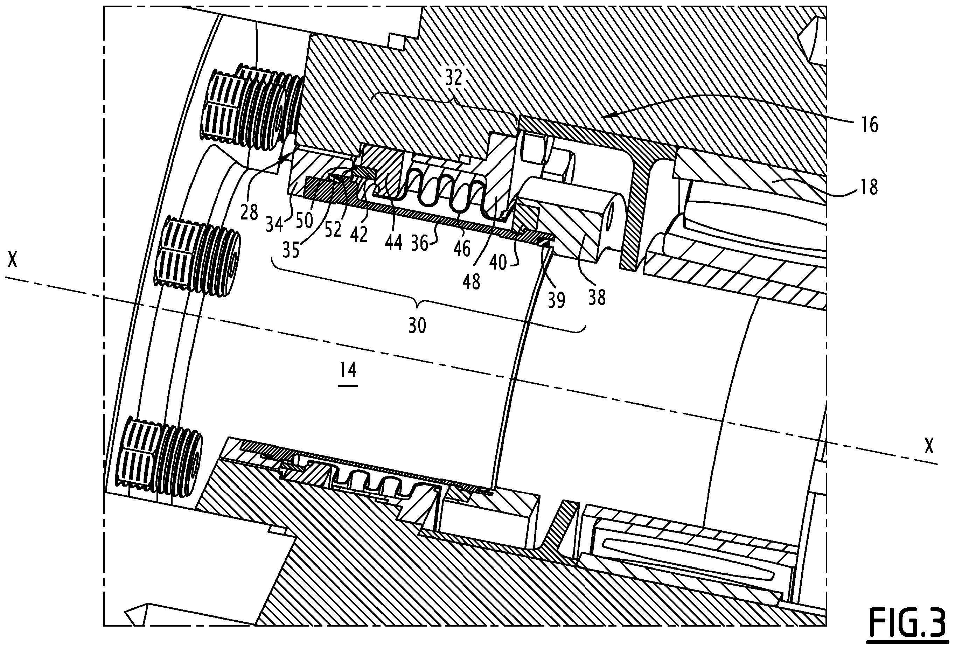

La garniture mécanique 16 est représentée plus en détail sur la Figure 3.

La garniture mécanique 16 comporte un ensemble rotatif 30 fixé axialement et en rotation à l'arbre d'actionnement 14 ainsi qu'un ensemble fixe en rotation 32 fixé au corps de base 10.

L'ensemble rotatif 30 est muni d'un premier anneau d'étanchéité 34, d'un manchon 36, d'une bride de serrage 38 et d'une contre bride 40.

L'ensemble fixe en rotation 32 comporte un deuxième anneau d'étanchéité 42, un porte anneau 44, un soufflet 46 et un support 48. L'ensemble fixe en rotation 32 s'étend axialement entre le premier anneau d'étanchéité 34 et la bride de serrage 38.

Le premier anneau d'étanchéité 34 est muni d'une première surface d'étanchéité 50 annulaire dirigée vers le deuxième anneau d'étanchéité 42, et le deuxième anneau d'étanchéité 42 comporte une deuxième surface d'étanchéité 52 annulaire dirigée vers le premier anneau d'étanchéité. La deuxième surface d'étanchéité 52 s'applique sur la première surface d'étanchéité 50.

Le premier anneau d'étanchéité 34 est fixé au manchon 36 et un joint d'étanchéité 35 est interposé entre ces deux éléments 34 et 36. De même, la bride de serrage 38 et la contre bride 40 sont fixées par serrage mutuel axial au manchon 36 et compriment un joint d'étanchéité 39 disposé entre le manchon 36 et l'arbre d'actionnement 14.

Le deuxième anneau d'étanchéité 42 et le porte anneau 44 sont fixes en rotation par rapport au corps de base 10 mais sont axialement mobiles par rapport à celui-ci. Ainsi, le soufflet 46 sollicite élastiquement le porte-anneau 44 et le deuxième anneau d'étanchéité 42 contre le premier anneau d'étanchéité 34 selon la direction axiale. Le soufflet 46 est de préférence fabriqué en métal et est fermé selon la direction circonférentielle autour de l'axe X-X.

L'utilisation d'une garniture mécanique 16 conduit à des forces de frottement extrêmement faibles entre les surfaces d'étanchéité 50 et 52 pour un effet d'étanchéité donné. Ainsi, le temps de réaction de la vanne papillon 4 est très court pour un couple d'actionnement donné et généré par le dispositif d'actionnement 20.

De plus, le temps de réaction de la vanne pour un couple d'actionnement donné est sensiblement identique sur une large plage de température grâce à l'utilisation d'un élément élastique, tel que du soufflet 46.

Egalement, l'utilisation d'un roulement 18 à corps de roulement permet de limiter les frottements entre l'arbre 14 et le corps de base 10 et contribue à la réactivité de la vanne selon l'invention.

Le fait que le soufflet 46, le deuxième anneau d'étanchéité 42 et le porte anneau 44 sont fixes en rotation par rapport au corps de base 10 conduit à des masses relativement faibles entraînées en rotation et augmente encore la réactivité de la vanne selon l'invention. Cette configuration facilite également le montage de l'ensemble.

En variante, le soufflet 46 peut être remplacé par n'importe quel moyen formant ressort, par exemple des ressorts hélicoïdaux.

Egalement, la garniture mécanique 16 peut être employée avec n'importe quelle vanne ayant un obturateur autre qu'un disque, par exemple un obturateur sphérique.

## Revendications

1. Ensemble de deux vannes (4, 6), chaque vanne comprenant
- un corps de base (10) qui définit un tronçon d'écoulement (22) d'un fluide ;
- un organe obturateur (12) mobile en rotation par rapport au corps de base (10) autour d'un axe de rotation (X-X) entre une position de passage de fluide et une position d'obturation du tronçon d'écoulement ;
- un arbre d'actionnement (14) de l'organe obturateur (12) traversant le corps de base (10);
- des moyens d'étanchéité interposés entre l'arbre d'actionnement (14) et le corps de base (10),
- un dispositif d'actionnement (20) configuré pour déplacer l'arbre (14) d'actionnement entre les positions de passage et d'obturation,
les moyens d'étanchéité comprenant une garniture mécanique (16),
- les deux tronçons d'écoulement étant alignés, **caractérisé en ce que** les deux vannes (4, 6) sont identiques et sont disposées à 180° l'une de l'autre autour d'un axe s'étendant perpendiculairement à l'axe (Y-Y) des tronçons d'écoulement (22) et à l'axe de rotation (X-X) des organes obturateur (12).

2. Ensemble selon la revendication 1, **caractérisé en ce que** la position de passage et la position d'obturation de l'organe obturateur (12) sont décalées l'une de l'autre de moins de 360°, et de préférence de 90°.

3. Ensemble selon la revendication 1 ou 2, **caractérisé en ce que** l'organe obturateur est un disque, notamment bombé.

4. Ensemble selon l'une quelconque des revendications 1 à 3, **caractérisé en ce que** la garniture mécanique comprend :
- un premier anneau d'étanchéité (34) solidaire en rotation de l'arbre d'actionnement,
- un deuxième anneau d'étanchéité (42) fixe en rotation du corps de base et axialement mobile par rapport au corps de base,
- un ressort (46) sollicitant les deux anneaux d'étanchéité (34, 42) l'un contre l'autre, et **en ce que** le deuxième anneau d'étanchéité (42) est fixé au ressort (46).

5. Ensemble selon la revendication 4, **caractérisée en ce que** le ressort comporte un soufflet (46), notamment en métal.

6. Ensemble selon l'une quelconque des revendications précédentes, **caractérisé en ce que** les vannes comprennent un roulement (18) ayant des corps de roulement, notamment des aiguilles, et **en ce que** l'arbre d'actionnement (14) est supporté en rotation par rapport au corps de base (10) au moyen de roulement (18).

7. Ensemble selon l'une des revendications 1 à 6, dans lequel la garniture mécanique (16) comporte un ensemble rotatif (30) fixé axialement et en rotation à l'arbre d'actionnement (14) et muni d'un premier anneau d'étanchéité (34), d'un manchon (36), d'une bride de serrage (38) et d'une contre bride (40).

8. Ensemble selon la revendication précédente, dans lequel le premier anneau d'étanchéité (34) est fixé au manchon (36) et un joint d'étanchéité (35) est interposé entre le premier anneau d'étanchéité (34) et le manchon (36).

9. Ensemble selon l'une des revendications 1 à 8, dans lequel la garniture mécanique (16) comporte un ensemble fixe en rotation (32) fixé au corps de base (10), l'ensemble fixe en rotation (32) comportant un deuxième anneau d'étanchéité (42), un porte anneau (44), un soufflet (46) et un support (48).

10. Ensemble selon les revendications 7 et 9, dans lequel l'ensemble fixe en rotation (32) s'étend axialement entre le premier anneau d'étanchéité (34) et la bride de serrage (38).

11. Ensemble selon les revendications 7 et 9 ou 10, dans lequel la bride de serrage (38) et la contre bride (40) sont fixées par serrage mutuel axial au manchon (36) et compriment un joint d'étanchéité (39) disposé entre le manchon (36) et l'arbre d'actionnement (14).

## Patentansprüche

1. Einheit aus zwei Ventilen (4, 6), wobei jedes Ventil umfasst:
- einen Basiskörper (10), der einen Fließabschnitt (22) eines Fluids definiert;
- ein Verschlussorgan (12), das in Bezug auf den Basiskörper (10) um eine Rotationsachse (X-X) zwischen einer Fluiddurchgangsposition und einer Verschlussposition des Fließabschnitts rotatorisch beweglich ist;
- eine Betätigungswelle (14) des Verschlussorgans (12), die den Basiskörper (10) durchquert;
- Dichtungsmittel, die zwischen der Betätigungswelle (14) und dem Basiskörper (10) zwischengestellt sind,
- eine Betätigungsvorrichtung (20), die ausgelegt ist, um die Betätigungswelle (14) zwischen der Durchgangs- und Verschlussposition zu verlagern,
wobei die Dichtungsmittel eine Gleitringdichtung (16) umfassen,
- wobei die zwei Fließabschnitte fluchten,
**dadurch gekennzeichnet, dass** die zwei Ventile (4, 6) identisch sind und in 180° voneinander um eine Achse angeordnet sind, die sich senkrecht zur Achse (Y-Y) der Fließabschnitte (22) und zur Rotationsachse (X-X) der Verschlussorgane (12) erstreckt.

2. Einheit nach Anspruch 1, **dadurch gekennzeichnet, dass** die Durchgangsposition und die Verschlussposition des Verschlussorgans (12) um weniger als 360°, vorzugsweise 90°, voneinander versetzt sind.

3. Einheit nach Anspruch 1 oder 2, **dadurch gekennzeichnet, dass** das Verschlussorgan eine insbesondere gewölbte Scheibe ist.

4. Einheit nach einem der Ansprüche 1 bis 3, **dadurch gekennzeichnet, dass** die Gleitringdichtung umfasst:
- einen ersten Dichtring (34), der mit der Betätigungswelle rotatorisch fest verbunden ist,
- einen zweiten Dichtring (42), der mit dem Basiskörper rotatorisch fest und in Bezug auf den Basiskörper axial beweglich ist,
- eine Feder (46), die die zwei Dichtringe (34, 42) gegeneinander beansprucht, und dass der zweite Dichtring (42) an der Feder (46) befestigt ist.

5. Einheit nach Anspruch 4, **dadurch gekennzeichnet, dass** die Feder einen Balg (46), insbesondere aus Metall, aufweist.

6. Einheit nach einem der vorangehenden Ansprüche, **dadurch gekennzeichnet, dass** die Ventile ein Lager (18) mit Wälzkörpern, insbesondere Nadeln, umfassen, und dass die Betätigungswelle (14) in Bezug auf den Basiskörper (10) mittels eines Lagers (18) rotatorisch gehalten wird.

7. Einheit nach einem der Ansprüche 1 bis 6, wobei die Gleitringdichtung (16) eine rotatorische Einheit (30) aufweist, die axial und rotatorisch an der Betätigungswelle (14) befestigt und mit einem ersten Dichtring (34), einer Muffe (36), einem Spannflansch (38) und einem Gegenflansch (40) versehen ist.

8. Einheit nach vorangehendem Anspruch, wobei der erste Dichtring (34) an der Muffe (36) befestigt ist und eine Dichtung (35) zwischen dem ersten Dichtring (34) und der Muffe (36) zwischengestellt ist.

9. Einheit nach einem der Ansprüche 1 bis 8, wobei die Gleitringdichtung (16) eine rotatorisch feste Einheit (32) aufweist, die am Basiskörper (10) befestigt ist, wobei die rotatorisch feste Einheit (32) einen zweiten Dichtring (42), einen Ringträger (44), einen Balg (46) und einen Halter (48) aufweist.

10. Einheit nach den Ansprüchen 7 und 9, wobei sich die rotatorisch feste Einheit (32) zwischen dem ersten Dichtring (34) und dem Spannflansch (38) axial erstreckt.

11. Einheit nach den Ansprüchen 7 und 9 oder 10, wobei der Spannflansch (38) und der Gegenflansch (40) durch gegenseitiges axiales Spannen an der Muffe (36) befestigt sind und eine Dichtung (39) komprimieren, die zwischen der Muffe (36) und der Betätigungswelle (14) angeordnet ist.

## Claims

1. An assembly of two valves (4, 6), each valve comprising:
- a base body (10) which defines a section (22) for the flow of a fluid;
- a plug member (12) movable in rotation relative to the base body (10) about an axis of rotation (X-X) between a fluid passage position and a plugged position of the flow section;
- an actuation shaft (14) of the plug member (12) crossing the base body (10);
- sealing means interposed between the actuation shaft (14) and the base body (10),
- an actuation device (20) configured to displace the actuation shaft (14) between the passage and plugged positions,
the sealing means comprising a mechanical seal (16),
the two flow sections being aligned,
**characterized in that** the two valves (4, 6) are identical and are disposed at 180° with respect to one another about an axis extending perpendicular to the axis (Y-Y) of the flow sections (22) and to the axis of rotation (X-X) of the plug members (12).

2. The assembly according to claim 1, **characterized in that** the passage position and the plugged position of the plug member (12) are shifted with respect to one another by less than 360°, and preferably 90°.

3. The assembly according to claim 1 or 2, **characterized in that** the plug member is a disk, in particular cambered.

4. The assembly according to any one of claims 1 to 3, **characterized in that** the mechanical seal comprises:
- a first sealing ring (34) secured in rotation with the actuation shaft,
- a second sealing ring (42) rotatably fixed to the base body and axially movable relative to the base body,
- a spring (46) biasing the two sealing rings (34, 42) against one another, and **in that** the second sealing ring (42) is fastened to the spring (46).

5. The assembly according to claim 4, **characterized in that** the spring includes a bellow (46), in particular made of metal.

6. The assembly according to any one of the preceding claims, **characterized in that** the valves comprise a bearing (18) having rolling bodies, in particular needles, and **in that** the actuation shaft (14) is supported in rotation relative to the base body (10) by means of the bearing (18).

7. The assembly according to any of claims 1 to 6, wherein the mechanical seal (16) includes a rotary set (30) axially and rotatably fixed to the actuation shaft (14) and provided with a first sealing ring (34), a sleeve (36), a clamping flange (38) and a counter-flange (40).

8. The assembly according to the preceding claim, wherein the first sealing ring (34) is fastened to the sleeve (36) and a sealing gasket (35) is interposed between the first sealing ring (34) and the sleeve (36).

9. The assembly according to any of claims 1 to 8, wherein the mechanical seal (16) includes a set (32) rotatably fixed to the base body (10), the rotatably fixed set (32) including a second sealing ring (42), a ring-carrier (44), a bellow (46) and a support (48).

10. The assembly according to claims 7 and 9, wherein the rotatably fixed set (32) extends axially between the first sealing ring (34) and the clamping flange (38).

11. The assembly according to claims 7 and 9 or 10, wherein the clamping flange (38) and the counter-flange (40) are fastened by axial mutual clamping to the sleeve (36) and compress a sealing gasket (39) disposed between the sleeve (36) and the actuation shaft (14).
